# EUROPÄISCHE PATENTSCHRIFT

(11) **EP 1 380 617 B1**
(45) Veröffentlichungstag und Bekanntmachung des Hinweises auf die Patenterteilung: **22.11.2006**
(21) Anmeldenummer: 03015902.4
(22) Anmeldetag: 11.07.2003
(51) Int. Cl.: C08K 9/04, C08K 9/06, C08K 9/08, C08K 9/10, C08K 9/12, B01J 13/02, B01J 13/06, B01J 13/08

(54) **Mikrokomposite und Verfahren zu deren Herstellung**
Microcomposites and a method for their preparation
Microcomposites et procédé pour leur préparation

(30) Priorität: 13.07.2002 DE 10231706
(43) Veröffentlichungstag der Anmeldung: 14.01.2004
(73) Patentinhaber: FRAUNHOFER-GESELLSCHAFT ZUR FÖRDERUNG DER ANGEWANDTEN FORSCHUNG E.V., 80686 München (DE)
(72) Erfinder: Hoss, Jan Dirk, 10557 Berlin (DE); Jobmann, Monika, Dipl.-Ing., 21614 Buxtehude (DE); Rafler, Gerald, Dr. habil., 14473 Potsdam (DE)

(56) Entgegenhaltungen:
- EP-A- 0 305 212
- EP-A- 0 672 707
- EP-A- 0 822 232
- DE-A- 4 008 361

## Beschreibung

Die Erfindung betrifft Mikrokomposite sowie ein Verfahren zu deren Herstellung, die aus einer aus einem hochschmelzenden Polymer bestehenden Matrix und mindestens einem in dieser enthaltenem Kunststoffadditiv aufgebaut sind. Die Partikelgeometrie und Partikelmorphologie läßt sich dabei über polymerspezifische Parameter, z. B. Polymerstruktur, Molmasse, Copolymere, und technologische Parameter der Partikelbildung gezielt einstellen. Aufgrund der hohen thermischen Stabilität eignen sich die Mikrokomposite vor allem als partikuläre Füllstoffe zur Verbesserung der Kompatibilität, zur Reduzierung der Permeabilität sowie zur Verbesserung der Handhabbarkeit von Additiven für thermoplastisch verformbare Kunststoffe.

Mikrokomposite sind in Form von Mikrokapseln mit Kern-Schale-Struktur bzw. von mikroskaligen Matrixpartikeln mit weitgehend homogener Verteilung der Komponenten über den Partikelquerschnitt bekannt. Der Kern von Mikrokapseln kann in fester, flüssiger oder gasförmiger Form (Hohlkugeln) vorliegen. Bei Matrixpartikeln sind homogen- und heterogenphasige Systeme bekannt.

Die Palette von kommerziellen oder in Marktvorbereitung befindlichen polymerbasierten Mikrokompositen in Form von Mikrokapseln oder mikroskaligen Matrixpartikeln wird neben den "klassischen" Applikationen bei den Durchschreibepapieren vor allem von Erzeugnissen des Life Sciences Sektors dominiert. Es sind Schutz- oder Abgabesysteme für Wirkstoffe der pharmazeutischen, kosmetischen und agrochemischen Industrie bzw. Lebens- und Futtermitteladditive, die durch Mikroverkapselung in ihrem Verarbeitungs- und Applikationsverhalten optimiert werden. Durch die Verkapselung lassen sich beispielsweise die zeitliche und/oder örtliche Verfügbarkeit eines Wirkstoffs kontrollieren, oder der Wirkstoff ist durch eine Verkapselung vor schädigenden Umwelteinflüssen zu schützen.

Die Eigenschaften mikroskaliger Zwei- oder Mehrstoffsysteme sollten sich jedoch auch im Werkstoffbereich, vorzugsweise bei der Verbesserung der Kompatibilität von Kunststoffadditiven oder bei der Erschließung neuer Möglichkeiten der reaktiven Compoundierung von Polymerwerkstoffen, in vielfältiger Weise nutzen lassen. Voraussetzung für die Anwendung polymerbasierter Mikrokapseln oder Matrixpartikel im werkstofflichen Bereich ist deren thermische und mechanische sowie chemische Stabilität unter kunststofftypischen Verarbeitungsbedingungen und Einsatztemperaturen. Für den Einsatz in Thermoplasten ist die Stabilität der Mikrokapseln oder Matrixpartikel unter Compoundierbedingungen in Doppelschneckenextrudern oder kontinuierlich arbeitenden Knetern bei kurzfristigen Temperaturbelastungen bis 300 °C unabdingbare Voraussetzung. Darüber hinaus sind auch Stabilität bei der Verformung durch Extrusion oder Spritzgießen zu gewährleisten.

Für Reaktivcompoundierverfahren ist zumeist nur temporäre Stabilität der Partikel gefordert, da eine gesteuerte Liberation der Inhaltsstoffe von Mikrokapseln oder Matrixpartikeln gefordert ist, bei der Reaktionskomponenten für eine chemische Umsetzung oder Katalysatoren bzw. Initiatoren für deren Aktivierung oder Initiierung zeitlich oder örtlich begrenzt zur Verfügung gestellt werden sollen.

In ähnlicher Weise wird auch beim Einsatz von Mikropartikeln in Reaktivharzen (ungesättigte Polyester, Epoxide, Polyurethane oder Polyharnstoffe) häufig eine zeitlich oder örtlich gezielte Zerstörung der Partikel angestrebt, um Harzkomponenten oder-Katalysatoren freizusetzen. Zur Verbesserung der mechanischen Eigenschaften besteht daneben jedoch auch bei Duromeren Bedarf an mikroverkapselten Füllstoffen mit entsprechender Langzeitstabilität.

Verfahren zur Herstellung von polymerbasierten Mikropartikeln mittels reaktiver und nichtreaktiver Partikelbildungsprozesse sind vielfach beschrieben. Bei der reaktiven Partikelbildung erfolgt die Bildung der Wand oder der Matrix parallel zu einem Polymerisations-, Polykondensations- oder Polyadditionsprozess. Bei den nichtreaktiven Verfahren werden filmbildende Polymere direkt eingesetzt, die auf thermodynamische Weise zur Phasenseparation und zur Partikelbildung gebracht werden (M. Jobmann, G. Rafler: Pharm. Ind. 60 (1998) 979).

Für reaktive Verfahren zur Verkapselung fester oder flüssiger Kernmaterialien werden sehr häufig Melamin-Formaldehyd-Harze eingesetzt (DE 199 23 202; UK 2 301 117), aber auch Isocyanat/Amin-Systeme werden beschrieben (AZ 101 56 672). Melamin-Formaldehyd-Harze sind zur Umhüllung hydrophober Kernmateriallen breit und problemlos einsetzbar, und sie können zur Partikelbildung aus wässriger Phase appliziert werden.

Matrixpartikel werden zumeist durch Emulsions- oder Suspensionspolymerisation hergestellt, u. a. werden durch Suspensionspolymerisation Mikrosphären aus Acrylnitril und/oder weiteren Comonomeren erhalten (US 3,615,972). Reaktivverfahren erfordern Kernmaterialien, die inert gegenüber den wand- bzw. matrixbildenden Monomeren oder Oligomeren sind, d. h. dass sie keine Reaktion mit anderen beteiligten Komponenten eingehen. Ausgenommen die Melamin-Formaldehyd-Harze sind bei diesen Reaktivverfahren häufig lange Reaktionszeiten erforderlich (bis zu 24 h). Die Mikrokapselgröße kann in Abhängigkeit von den Reaktionsbedingungen (z.B. Emulgatorzusatz, Dispergiermethode) zwischen 10 und 150 µm liegen. Für eine Monomerkonzentration unter 10 Masse-% und bei Einsatz von hochscherenden Dispergierwerkzeugen können auch Größen um 1 µm erreicht werden (EP 0 653 444). Bei den nichtreaktiven Verfahren wird ein Polymeres aus Lösung durch Dispergier-, Vertropfungs- oder Sprühprozesse bzw. über Verfahren, die auf dem Prinzip der Flüssig-Flüssig-Phasentrennung basieren, in eine partikuläre Form überführt. Dispergier-, Vertropfungs- und Sprühverfahren umfassen eine Lösungsmittelverdampfung; Phasentrennverfahren dagegen basieren auf dem Prinzip der Ausfällung des Wandmaterials, z.B. durch Zugabe einer inkompatiblen Komponente zur Polymerlösung. Ausschlaggebend für die Auswahl eines Kapselverfahrens ist die Löslichkeit des polymeren Wand- bzw. Matrixmaterials in einem organischen Lösungsmittel sowie die Verträglichkeit des zu verkapselnden bzw. einzubettenden Wirkstoffs mit diesem Lösungsmittel.

Als Polymere für nichtreaktive Verkapselungsverfahren im Life Science Bereich werden infolge ihrer hohen Biokompatibilität sehr häufig Gelatine, Polyacrylate sowie aliphatische Homo- und Copolyester der Milch- bzw. β-Hydroxybuttersäure genannt (R. H. Müller. "Colloidal Carriers for Controlled Drug Delivery and Targeting", Wiss. Verlagsgesellschaft mbH, Stuttgart, 1991; T. L. Whateley. "Microencapsulation of Drugs", Harwood Academic Publishers, Chur, 1992). Bei technischen Applikationen stehen Polymethacrylate sowie Polystyrene infolge ihrer guten Löslichkeit in organischen Lösungsmitteln im Vordergrund.

Linearkettige, thermoplastisch verformbare Polymere sind für die Mikroverkapselung von Kunststoffadditiven nur begrenzt anwendbar, da sie unter den Compoundier- und Verarbeitungsbedingungen von üblichen Thermoplasten verformt, aufgelöst oder zerstört werden. Die erforderlichen Schmelzpunktdifferenzen von mindestens 40 °C können nur selten für sehr niedrig erweichende Polymere erreicht werden. Nicht schmelzbar und damit relativ breit einsetzbar für die Verkapselung von Kunststoffadditiven sind Duromere, wie Melamin-Formaldehyd-Harze, und sie werden deshalb auch als Wandmaterialien für diverse Additive beschrieben. Allerdings gibt es Grenzen für die reaktive Verkapselung mit Reaktivharzen bei Additiven, die mit dem Harz reagieren können sowie bei der thermischen Belastbarkeit dieser Harze.

Prinzipiell wären temperaturbeständige Polymere, wie Polyaramide, Polysulfone, etc., für die nichtreaktive Verkapselung von Kunststoffadditiven besonders geeignet, da sie sehr hohe Schmelz- bzw. Erweichungstemperaturen aufweisen bzw. unschmelzbar sind sowie durch hohe chemische Stabilität charakterisiert sind. Sie können jedoch bisher nicht oder nur sehr eingeschränkt eingesetzt werden, da sie strukturbedingt erhebliche Löslichkeitsprobleme in eingeführten organischen Lösungsmitteln aufweisen.

Aus der EP-A-0 822 232 sind Kieselsäure - Silikonpulver Mikrokapseln mit einem Teildurchmesser von 2,7 bis 3,5 µm bekannt. Die EP-A-0672707 offenbart Mikrokapseln aus Polyetherimid.

Ausgehend hiervon war es Aufgabe der vorliegenden Erfindung, die aus dem Stand der Technik bekannten Nachteile zu beseitigen und ein Verfahren zur Herstellung von Mikrokompositen bereitzustellen, mit denen auf einfache und kostengünstige Weise Mikrokomposite hoher Stabilität hergestellt werden können.

Diese Aufgabe wird durch die Mikrokomposite mit den Merkmalen des Anspruches 1 sowie durch das Verfahren zu deren Herstellung mit den Merkmalen des Anspruches 7 gelöst. Die weiteren abhängigen Ansprüche zeigen vorteilhafte Weiterbildungen auf. In den Ansprüchen 21 und 22 wird die Verwendung der erfindungsgemäßen Mikrokomposite beschrieben.

Erfindungsgemäß werden Mikrokomposite mit einer mittleren Partikelgröße zwischen 1 und 50 µm bereitgestellt, die aus einer aus einem hochschmelzenden Polymer bestehenden Matrix und mindestens einem in dieser enthaltenem Kunststoffadditiv aufgebaut sind. Das Polymer weist dabei eine thermische Stabilität bis 300 °C auf und ist in mit Wasser emulgierbaren organischen Lösungsmitteln löslich. Vorzugsweise weist das Polymer eine linearkettige Struktur auf.

Die mittlere Partikelgröße liegt vorzugsweise zwischen 1 und 30 µm, besonders bevorzugt zwischen 3 und 20 µm. Die Molmasse der Polymere ist durch einen von der chemischen Struktur abhängigen optimalen Bereich charakterisiert, in dem die Polymere Mikrokomposite in hoher Ausbeute und mechanischer Stabilität bilden. Die zahlenmittlere Molmasse Mₙ dieser Materialien beträgt vorzugsweise zwischen 20.000 und 100.000 g/mol bei einem Verhältnis M_{w}/Mₙ ~ 2. Erfindungsgemäß werden als Polymere Polyacrylnitril, Poly-m-phenylen-isophthalamid, Polyethersulfon und Polyetherimid verwendet. Diese Polymere können sowohl kommerziell erworben werden als auch nach bekannten Methoden durch Polymerisation oder Polykondensation aus marktverfügbaren Monomeren sythetisiert werden.

Als Kunststoffadditive werden erfindungsgemäß Flammschutzmittel, Farbpigmente, Metallflakes sowie Gleitmittel verwendet. Der Masseanteil der Kunststoffadditive beträgt dabei vorzugsweise mehr als 30 Gew.-%, besonders bevorzugt zwischen 50 und 90 Gew.-%.

Hinsichtlich der Struktur der Mikrokomposite können diese die Form einer Mikrokapsel mit Kern-Schale-Struktur aufweisen, wobei das Kunststoffadditiv dann den Kern und die Matrix die Schale bildet. Ebenso ist es auch möglich, daß das Mikrokomposit die Form eines Matrixpartikels aufweist, wobei das Kunststoffadditiv weitgehend homogen im Partikel verteilt ist.

Erfindungsgemäß wird ebenso ein Verfahren zur Herstellung von Mikrokompositen, wie vorstehend beschrieben, aus einer aus mindestens einem hochschmelzenden Polymer bestehenden Matrix und mindestens einem darin enthaltenen Kunststoffadditiv bereitgestellt, das auf den folgenden Verfahrensschritten beruht:
1. Zunächst wird eine Polymerlösung durch Lösen des Polymers in einem Lösungsmittel hergestellt, dem dann das Kunststoffadditiv zugesetzt wird.
2. Im Anschluß wird eine stabile viskose Emulsion durch Zugabe eines Emulsionsmittels hergestellt.
3. Der Emulsion wird ein Extraktionsmittel zur Extraktion des Lösungsmittels unter Ausbildung der Mikrokomposite zugesetzt.
4. Die Mikrokomposite werden mittels Flüssig-Fest-Trenntechniken isoliert.

Als Lösungsmittel kommen alle mit Wasser mischbaren Lösungsmittel in Frage. Bevorzugt werden hierbei Dimethylformamid (DMF), Dimethylacetamid (DMAc), N-Methylpyrrolidon (NMP) oder Dimethylsulfoxid (DMSO) verwendet.

Die Konzentration der herzustellenden Polymerlösung wird durch die Molmasse des eingesetzten Polymeren bestimmt. Bei höheren Molmassen kann die Polymerlösung nur eine niedrigere Konzentration aufweisen, um eine optimale Viskosität nicht zu überschreiten. Werden Polymere niedrigerer Molmasse eingesetzt, kann eine entsprechend höhere Konzentration der Polymerlösung eingestellt werden. Die Konzentration der Polymerlösung liegt vorzugsweise in einem Bereich zwischen 1 und 20.Gew.-%.

Die erfindungsgemäße Verfahrensweise ist breit anwendbar, da die Eigenschaften der Kunststoffadditive das Verfahren nicht beeinflussen. Sie können hydrophile oder hydrophobe Grenz- bzw. Oberflächeneigenschaften aufweisen, und das Additiv kann in dem Lösungsmittel löslich sein oder es kann dispergiert, z. B. durch Zusatz des Kunststoffadditivs als Feststoff, vorliegen. Wichtig ist, daß es keine Wechselwirkung mit dem eingesetzten Matrixpolymer oder dem Lösungsmittel zeigt und daß das Kunststoffadditiv unter den Verfahrensbedingungen stabil ist. Erfindungsgemäß ist das Kunststoffadditiv ausgewählt aus der Gruppe Flammschutzmittel, Farbpigmente, Metallflakes und Gleitmittel.

Zur Herstellung der Emulsion sind alle Emulsionsmittel geeignet, die keine oder nur eine sehr begrenzte Mischbarkeit mit dem Polymerlösungsmittel aufweisen, sowie weder Lösungsmittel für das Matrixpolymer noch für das Kunststoffadditiv sind. Aus den genannten Gründen sind zur Erzeugung einer entsprechenden Viskosität bevorzugt Mineral- oder Pflanzenöle geeignet, beispielsweise Silicon- oder Paraffinöl. In diesem Emulsionsmittel wird das Gemisch aus Matrixpolymer und Kunststoffadditiv durch intensives Mischen zu kleinen Tröpfchen verteilt. Die Verteilung der kunststoffadditivhaltigen Polymerlösung in dem Emulsionsmittel kann vorzugsweise durch organolösliche Emulgatoren, zugegeben in einer Konzentration zwischen 0,5 und 5 Vol.-%, unterstützt werden, wodurch eine zusätzliche Stabilisierung der Emulsion ermöglicht wird. Bevorzugte Emulgatoren sind anionaktive oder nicht ionogene Substanzen, z. B. TWEEN®85. Das Verhältnis zwischen gelöstem Polymer zu Emulsionsmittel beträgt vorzugsweise 1:2 bis 1:6, bezogen auf das Volumen. Die Tröpfchengröße der entstehenden Mikrokomposite kann dabei über das Verhältnis zwischen gelöstem Polymer zu Emulsionsmittel und die Rührgeschwindigkeit eingestellt werden. Die Tröpfchengröße bestimmt dabei die spätere Größe der entstehenden Mikrokomposite. Die hohe Viskosität des Systems bewirkt, daß verhältnismäßig kleine Tröpfchen gebildet werden können, da die Koaleszenz der Tröpfchen erschwert ist.

Das Extraktionsmittel wird der Emulsion unter Rühren zugesetzt. Je langsamer diese Zugabe erfolgt, um so intensiver ist der Kontakt zur Extraktion des Polymerlösungsmittels. Entsprechend weniger Agglomerate sind später zu erwarten. Die Aufarbeitung der entstehenden Mikrokomposite wird dadurch deutlich erleichtert. Erfindungsgemäß werden vorzugsweise Wasser bzw. wäßrige anorganische bzw. organische Phasen als Extraktionsmittel eingesetzt. Diese sind mit dem Polymerlösungsmittel mischbar, mit dem Emulsionsmittel unmischbar bzw. nur sehr begrenzt mischbar. Gleichzeitig dürfen sie für das Matrixpolymer und die Kunststoffadditive kein Lösungsmittel darstellen. Das Verhältnis zwischen Emulsion und Extraktionsmittel muß so eingestellt sein, daß das Polymerlösungsmittel vollständig extrahiert werden kann. Es sollte hierbei vorzugsweise ein Volumenverhältnis zwischen Extraktionsmittel und Emulsion von mindestens 2:1 bestehen. Bei Verwendung einer geringeren Menge an Extraktionsmittel agglomerieren die Einzelpartikel zu körnigen Aggregaten, die schlecht zu redispergieren sind.

Nach der Bildung der Mikropartikel durch Aushärtung der Partikelschale bzw. der Partikelmatrix werden diese durch zur Phasentrennung fest-flüssig üblicherweise eingesetzte Trennverfahren isoliert. Hierzu zählen vorzugsweise die Zentrifugation und die Filtration. In Abhängigkeit von dem jeweiligen Anwendungsfeld kann vorzugsweise ein zusätzlicher Wasch- und/oder Trockenschritt erfolgen.

Verwendung finden die erfindungsgemäßen Mikrokomposite vorzugsweise als partikuläre Füllstoffe zur Verbesserung der Kompatibilität von thermoplastisch verformbaren Kunststoffen. Eine weitere Verwendung liegt in der Einbringung von Kunststoffadditiven in polymere Werkstoffe. Die erfindungsgemäßen Mikrokomposite können analog zu den Ausgangsprodukten in Thermoplaste mittels Zweischneckenextrudern oder Knetern eingearbeitet und die Compounds durch übliche thermoplastische Formgebungsverfahren, wie Extrusion, Spritzgießen oder Thermopressen, verarbeitet werden. Thermische und mechanische Stabilität unter Verarbeitungs- und Einsatzbedingungen werden durch die chemische Struktur der eingesetzten nicht- bzw. hochschmelzenden Mikrokomposite bzw. deren Dimensionierung im Mikrometer-Bereich gewährleistet.

Anhand der folgenden Beispiele soll der erfindungsgemäße Gegenstand näher erläutert werden, ohne diesen auf diese Ausführungsbeispiele zu beschränken.

### Beispiel 1

40 ml einer 3%-igen Lösung aus PAN der Molmasse Mₙ= 50.000 g/mol in DMF werden in einem Becherglas vorgelegt und dieser Lösung 0,125 g von TWEEN^{®}85 zugesetzt. Unter Rühren mit ca. 500 U/min werden innerhalb von 30 min 150 ml Silikonöl (DC200) zugetropft, anschließend wird noch 10 min weitergerührt. Unter fortgesetztem Rühren (ca. 700 U/min) werden dann 600 ml Wasser zur Extraktion des Polymerlösungsmittels in die Emulsion innerhalb von 1 h eingetropft. Nach 30 min werden die Mikrokomposite über Papierfilter abgesaugt und mit Benzin gewaschen, im Umluft-Trockenschrank bei 50 °C getrocknet. Man erhält Mikrokomposite sphärischer Gestalt mit einer monomodalen Partikelgrößenverteilung (10 % < 1,4 µm, 50 % < 2,7 µm, 90 % < 5 µm). Die Ausbeute beträgt 90 %.

### Beispiel 2

1,2 g Titandioxid werden dem in Beispiel 1 beschriebenen Ansatz zugegeben und anschließend analog Beispiel 1 Mikropartikel hergestellt und aufgearbeitet. Es werden titandioxidhaltige Mikrokomposite mit einem Partikeldurchmesser von 5 - 10 µm bei einer Ausbeute von 95 % erhalten.

### Beispiel 3

In 100 ml einer 10%-igen PAN-Lösung in DMSO (Mₙ= 25.000 g/mol) werden 10 g roter Phosphor dispergiert, der Dispersion 0,5 g TWEEN^{®} 5 zugefügt. Unter Rühren werden 600 ml Paraffinöl, dickflüssig zugetropft. Das Polymerlösungsmittel wird mit 1 l Wasser/Ethanol-Gemisch extrahiert. Man erhält Partikel im Größenbereich 10 - 30 µm, die Ausbeute beträgt 90 %.

### Beispiel 4

In 100 ml einer 10%-igen PAN-Lösung in DMSO (Mₙ= 25,000 g/mol) werden 10 g Ammoniumpolyphosphat dispergiert, der Dispersion 0,5 g TWEEN^{®}85 zugefügt.

Unter Rühren werden 600 ml Paraffinöl, dickflüssig zugetropft. Das Polymerlösungsmittel wird mit 1 l Wasser/Ethanol-Gemisch extrahiert und mit Ethanol nachgewaschen. Man erhält Partikel im Größenbereich 5 - 25 *µ*m, die Ausbeute beträgt 90 %.

### Beispiel 5

In 100 ml einer 10%-igen Poly-m-phenylen-isophthalamid-Lösung in DMAc (M,= 45.000 g/mol) werden 10 g roter Phosphor dispergiert, der Dispersion 0,5 g TWEEN^{®}85 zugefügt. Unter Rühren werden 600 ml Paraffinöl, dickflüssig zugetropft. Das Polymerlösungsmittel wird mit 1 l Wasser extrahiert und mit Ethanol nachgewaschen. Man erhält Partikel im Größenbereich 10 - 30 µm, die Ausbeute beträgt 95 %.

### Beispiel 6

In 100 ml einer 10%-igen Poly-m-phenylen-isophthalamid-Lösung in DMAc (Mₙ= 45.000 g/mol) werden 10 g MoS₂ dispergiert, der Dispersion 0,5 g TWEEN^{®} 85 zugefügt. Unter Rühren werden 600 ml Paraffinöl, dickflüssig zugetropft. Das Polymerlösungsmittel wird mit 1 l Wasser extrahiert und mit Ethanol nachgewaschen. Man erhält Partikel im Größenbereich 10 - 15 µm, die Ausbeute beträgt 90 %.

### Beispiel 7

In 100 ml einer 10%-igen Polyetherimid-Lösung in DMAc (Mₙ= 45.000 g/mol) werden 10 g roter Phosphor dispergiert, der Dispersion 0,5 g TWEEN^{®} 85 zugefügt. Unter Rühren werden 600 ml Paraffinöl, dickflüssig zugetropft. Das Polymerlösungsmittel wird mit 1 l Wasser extrahiert und mit Ethanol nachgewaschen. Man erhält Partikel im Größenbereich 10 - 30 µm, die Ausbeute beträgt 92 %.

### Beispiel 8

2 l einer 10%-igen Lösung aus PAN der Molmasse Mₙ = 25.000 g/mol in DMF werden gemeinsam mit 250 g TiO₂ in einem 60 l Reaktor mit Dispergator und Ankerrührer vorgelegt und dieser Lösung 6,5 g TWEEN^{®} 85 zugesetzt. Unter Rühren mit ca. 500 U/min werden innerhalb von 30 min 7,51 Silikonöl (DC200) zugetropft, anschließend wird noch 10 min weitergerührt. Unter fortgesetztem Rühren (ca. 700 U/min) werden dann 30 l Wasser zur Extraktion des Polymerlösungsmittels in die Emulsion innerhalb von 1 h eingetropft. Nach 30 min werden die Mikrokomposite abfiltriert, mit Wasser und Ethanol gewaschen und im Umluft-Trockenschrank bei 50 °C getrocknet. Man erhält Mikrokomposite sphärischer Gestalt mit einem mittleren Teilchendurchmesser von 7,5 µm bei einer monomodalen Partikelgrößenverteilung. Die Ausbeute beträgt 300 g verkapseltes TiO₂ Die Aufarbeitung der abgetrennten flüssigen Phase zur Rückgewinnung des Silikonöles erfolgt durch Flüssig-Flüssig-Extraktion mit Benzin.

### Beispiel 9

Analog Beispiel 8 werden 500 g Ammoniumpolyphosphat mit PAN verkapselt und anschließend aufgearbeitet. Nach Separation und Trocknung werden 600 g verkapseltes Produkt mit einer mittleren Teilchengröße von 10 *µ*m erhalten.

### Beispiel 10

In einem Laboruniversalkneter mit Austragschnecke werden 800 g Polyproylengranulat (Schmelzindex 12 g*min⁻¹ bei 190 °C und 5 kg Belastung) bei 190 °C aufgeschmolzen und innerhalb von 20 min mit 40 g eines mit PAN mikroverkapselten TiO₂ bei 220 °C vermischt und anschließend granuliert. Der Schmelzindex des Granulats beträgt 10 g*min⁻¹ bei 190 °C und einer Belastung von 5 kg. Das titandioxidhaltige Polypropylen wird auf einer Spritzgießmaschine ARBURG ALLROUN-DER 270 M bei 250 °C zu Normprüfstäben entsprechend der ISO 3167 verspritzt. Die mechanischen Kennwerte des Materials wurden auf einer Universaltestmaschine ZWICK 20 Kn bei Raumtemperatur nach Lagerung im Normalklima an den durch Spritzguß hergestellten Normprüfkörpern bestimmt.

### Tabelle 1 zeigt mechanische Kennwerte von erfindungsgemäß hergestellten Compounds (PP/TiO₂).

**Tabelle 1**

| Material | Zugfestigkeit | Dehnung [%] | E-Modul [Gpa] |
|---|---|---|---|
| | [Mpa] | | |
| Polypropylen (Vergleich) | 31,2 | >50 | 0,8 |
| PP/TiO₂ | 30,0 | 20,0 | 1,0 |

### Beispiel 11

800 g Polyproylengranulat (Schmelzindex 12 g*min⁻¹ bei 190 °C und 5 kg Belastung) und 60 g eines mit PAN mikroverkapselten Ammoniumpolyphosphats werden innerhalb von 45 min über eine Dosiereinrichtung in einen Doppelschneckenextruder MICRO 18/30 D eingebracht. Die Temperatur der Heizzonen des Extruders ist vom Eingang zum Austrag ansteigend zwischen 195 und 220 °C eingestellt. Der Schmelzestrang wird nach Wasserkühlung granuliert. Die analog Beispiel 10 hergestellten und untersuchten Normprüfstäbe weisen die in Tabelle 2 zusammengefassten Eigenschaften auf.

### Tabelle 2 zeigt mechanische Kennwerte von erfindungsgemäß hergestellten Compounds (PP/Flammschutzmittel).

**Tabelle 2**

| Material | Zugfestigkeit | Dehnung [%] | E-Modul [Gpa] |
|---|---|---|---|
| | [Mpa] | | |
| Polypropylen (Vergleich) | 31,2 | >50 | 0,8 |
| PP/Ammoniumpolyphosphat | 30,0 | 18,2 | 1,1 |

### Beispiel 12

Analog Beispiel 11 werden 800 g Polyproylengranulat (Schmelzindex 12 g*min⁻¹ bei 190 °C und 5 kg Belastung), 265 g Kurzglasfasern und 60 g eines mit PAN mikroverkapselten Ammoniumpolyphosphats vorgemischt und innerhalb von 60 min über eine Dosiereinrichtung in einen Doppelschneckenextruder MICRO 18/30 D eingebracht. Die Temperatur der Heizzonen des Extruders ist vom Eingang zum Austrag ansteigend zwischen 195 und 220 °C eingestellt. Der Schmelzestrang wird nach Wasserkühlung granuliert. Die analog Beispiel 10 hergestellten und untersuchten Normprüfstäbe weisen die in Tabelle 3 zusammengefassten Eigenschaften auf.

### Tabelle 3 zeigt mechanische Kennwerte von erfindungsgemäß hergestellten Compounds (PP/Glasfasern/Flammschutzmittel)

**Tabelle 3**

| Material | Zugfestigkeit | Dehnung | E-Modul |
|---|---|---|---|
| | [Mpa] | [%] | [Gpa] |
| Polyproylen (Vergleich) | 31,2 | >50 | 0,8 |
| PP/Kurzglasfasern/Ammoniumpolyphosphat | 45,0 | 3,0 | 5,1 |

## Patentansprüche

1. Mikrokomposite mit einer mittleren Partikelgröße zwischen 1 und 50 µm aus einer aus einem hochschmelzenden Polymer ausgewählt aus der Gruppe Polyacrylnitril, Poly-m-phenylen-isophthalamid, Polyethersulfon und Polyetherimid bestehenden Matrix und mindestens einem in dieser enthaltenen Kunststoffadditiv ausgewählt aus der Gruppe Flammschutzmittel, Farbpigmente, Metallflakes und Gleitmittel, wobei das Polymer bis zu Temperaturen von 300 °C thermisch stabil und in einem mit Wasser emulgierbaren organischen Lösungsmittel löslich ist.

2. Mikrokomposite nach Anspruch 1,
**dadurch gekennzeichnet, dass** die mittlere Partikelgröße zwischen 1 und 30 µm, bevorzugt zwischen 3 und 20 µm beträgt.

3. Mikrokomposite nach mindestens einem der Ansprüche 1 oder 2,
**dadurch gekennzeichnet, dass** die mittlere Molmasse des Polymers zwischen 20.000 und 100.000 g/mol beträgt.

4. Mikrokomposite nach mindestens einem der Ansprüche 1 bis 5,
**dadurch gekennzeichnet, dass** der Massenanteil des mindestens einen Kunststoffadditivs größer 30 Gew.-%, bevorzugt zwischen 50 und 90 Gew.-% beträgt.

5. Mikrokomposite nach mindestens einem der Ansprüche 1 bis 4,
**dadurch gekennzeichnet, dass** die Mikrokomposite die Form einer Mikrokapsel mit Kern-Schale-Struktur aufweist, wobei das Kunststoffadditiv den Kern und die Matrix die Schale bildet.

6. Mikrokomposite nach mindestens einem der Ansprüche 1 bis 5,
**dadurch gekennzeichnet, dass** die Mikrokomposite die Form eines Matrixpartikels aufweist, wobei das Kunststoffadditiv weitgehend homogen im Partikel verteilt ist.

7. Verfahren zur Herstellung von Mikrokompositen nach einem der Ansprüche 1-6, aus einer aus mindestens einem hochschmelzenden Polymer bestehenden Matrix und mindestens einem darin enthaltenem Kunststoffadditiv mit folgenden Schritten:
1) Lösen des Polymers in einem Lösungsmittel und Zugabe des Kunststoffadditivs,
2) Herstellen einer stabilen viskosen Emulsion durch Zugabe eines Emulsionsmittels,
3) Zugabe eines Extraktionsmittels zur Extraktion des Lösungsmittels unter Ausbildung der Mikrokomposite,
4) Isolierung der Mikrokomposite mittels Flüssig-Fest-Trenntechniken..

8. Verfahren nach Anspruch 7,
**dadurch gekennzeichnet, dass** das Lösungsmittel ausgewählt ist aus der Gruppe Dimethylformamid, Dimethylacetamid, N-Methylpyrrolidon und Dimethylsulfoxid.

9. Verfahren nach mindestens einem der Ansprüche 8 oder 9,
**dadurch gekennzeichnet, dass** der Gehalt des Polymers in der Lösung zwischen 1 und 20 Gew.-% beträgt.

10. Verfahren nach mindestens einem der Ansprüche 7 bis 9,
**dadurch gekennzeichnet, dass** das Kunststoffadditiv im Lösungsmittel in gelöster Form vorliegt.

11. Verfahren nach mindestens einem der Ansprüche 7 bis 10,
**dadurch gekennzeichnet, dass** das Kunststoffadditiv im Lösungsmittel in disperser Form vorliegt.

12. Verfahren nach mindestens einem der Ansprüche 7 bis 11,
**dadurch gekennzeichnet, dass** das Emulsionsmittel ausgewählt ist aus der Gruppe der Mineral- oder Pflanzenöle, insbesondere Silikon- und Paraffinöl.

13. Verfahren nach mindestens einem der Ansprüche 7 bis 12,
**dadurch gekennzeichnet, dass** das Verhältnis zwischen gelöstem Polymer zu Emulsionsmittel 1:2 bis 1:6, bezogen auf das Volumen, beträgt.

14. Verfahren nach mindestens einem der Ansprüche 7 bis 13,
**dadurch gekennzeichnet, dass** die Tröpfchengröße der entstehenden Mikrokomposite über das Verhältnis zwischen gelöstem Polymer zu Emulsionsmittel und die Rührgeschwindigkeit eingestellt wird.

15. Verfahren nach mindestens einem der Ansprüche 7 bis 14,
**dadurch gekennzeichnet, dass** in Schritt 2) zusätzlich Emulgatoren, insbesondere anionaktive und nichtionogene Verbindungen, in einer Konzentration zwischen 0,5 und 5 Vol.-% zur Stabilisierung der Emulsion zugesetzt werden.

16. Verfahren nach mindestens einem der Ansprüche 7 bis 15,
**dadurch gekennzeichnet, dass** als Extraktionsmittel Wasser oder wässrige Lösungsmittel verwendet werden.

17. Verfahren nach mindestens einem der Ansprüche 7 bis 16,
**dadurch gekennzeichnet, dass** das Volumenverhältnis zwischen Extraktionsmittel und Emulsion mindestens 2:1 beträgt.

18. Verfahren nach mindestens einem der Ansprüche 7 bis 17,
**dadurch gekennzeichnet, dass** die Isolierung der Mikrokomposite mittels Zentrifugation oder Filtration erfolgt.

19. Verfahren nach mindestens einem der Ansprüche 7 bis 18,
**dadurch gekennzeichnet, dass** im Anschluß an Schritt 4) die Mikrokomposite zusätzlich gewaschen und/oder getrocknet werden.

20. Verwendung der Mikrokomposite nach mindestens einem der Ansprüche 1 bis 6 als partikuläre Füllstoffe.

21. Verwendung der Mikrokomposite nach mindestens einem der Ansprüche 1 bis 6 zur Einbringung von Kunststoffadditiven in polymere Werkstoffe.

## Claims

1. Microcomposites having a mean particle size of between 1 and 50 µm and comprising a matrix of a high-melting polymer selected from the group comprising polyacrylonitrile, poly m-phenylene-isophthalamide, polyether sulphone and polyether imide, as well as at least one plastic additive contained therein and selected from the group comprising flame retardants, colouring pigments, metal flakes and slip agents, the polymer being thermally stable up to temperatures of 300°C and soluble in an organic solvent which can be emulsified with water.

2. Microcomposites according to claim 1, **characterised in that** the mean particle size is between 1 and 30 *µ*m, preferably between 3 and 20 *µ*m.

3. Microcomposites according to at least one of claims 1 or 2, **characterised in that** the mean relative molar mass of the polymer is between 20,000 and 100,000 g/mol.

4. Microcomposites according to at least one of claims 1 to 5, **characterised in that** the proportion by weight of the at least one plastic additive is greater than 30 wt-%, preferably between 50 and 90 wt-%.

5. Microcomposites according to at least one of claims 1 to 4, **characterised in that** the microcomposite has the form of a microcapsule with a core-shell structure, the plastic additive forming the core and the matrix forming the shell.

6. Microcomposites according to at least one of claims 1 to 5, **characterised in that** the microcomposite has the form of a matrix particle, the plastic additive being distributed largely homogeneously in the particle.

7. Method for producing microcomposites according to one of claims 1-6 from a matrix comprising at least one high-melting polymer and at least one plastic additive contained therein, said method having the following steps:
1) dissolving the polymer in a solvent and adding the plastic additive,
2) producing a stable viscous emulsion by adding an emulsifying agent,
3) adding an extracting agent to extract the solvent, forming the microcomposites,
4) isolating the microcomposites by means of liquid-solid separating techniques.

8. Method according to claim 7, **characterised in that** the solvent is selected from the group comprising dimethyl formamide, dimethyl acetamide, N-methyl pyrrolidone and dimethyl sulphoxide.

9. Method according to at least one of claims 8 or 9, **characterised in that** the content of the polymer in the solution is between 1 and 20 wt-%.

10. Method according to at least one of claims 7 to 9, **characterised in that** the plastic additive is present in the solvent in dissolved form.

11. Method according to at least one of claims 7 to 10, **characterised in that** the plastic additive is present in the solvent in dispersed form.

12. Method according to at least one of claims 7 to 11, **characterised in that** the emulsifying agent is selected from the group of mineral or vegetable oils, especially silicone and paraffin oil.

13. Method according to at least one of claims 7 to 12, **characterised in that** the ratio of dissolved polymer to emulsifying agent is between 1:2 and 1:6, in relation to the volume.

14. Method according to at least one of claims 7 to 13, **characterised in that** the droplet size of the microcomposites produced is adjusted via the ratio of dissolved polymer to emulsifying agent and the stirring rate.

15. Method according to at least one of claims 7 to 14, **characterised in that** in step 2) emulsifiers, especially anion-active and non-ionogenic compounds are additionally added in a concentration of between 0.5 and 5 % by volume to stabilise the emulsion.

16. Method according to at least one of claims 7 to 15, **characterised in that** water or aqueous solvents are used as extracting agents.

17. Method according to at least one of claims 7 to 16, **characterised in that** the proportion by volume of extracting agent to emulsion is at least 2:1.

18. Method according to at least one of claims 7 to 17, **characterised in that** the isolation of the microcomposites takes place by means of centrifugation or filtration.

19. Method according to at least one of claims 7 to 18, **characterised in that**, following step 4), the microcomposites are additionally washed and/or dried.

20. Use of the microcomposites according to at least one of claims 1 to 6 as particulate fillers.

21. Use of the microcomposites according to at least one of claims 1 to 6 for introducing plastic additives into polymeric materials.

## Revendications

1. Matériaux microcomposites ayant une taille moyenne des particules entre 1 et 50 µm, d'une matrice consistant en un polymère à point de fusion élevé, choisi dans le groupe polyacrylnitrile, poly-m-phénylène-isophtalamide, polyéthersulfone et polyétherimide, et au moins un additif plastique contenu dans celle-ci, choisi dans le groupe produits ignifuges, pigments colorés, paillettes métalliques et lubrifiants, dans lesquels le polymère est thermiquement stable jusqu'à des températures de 300° C et est soluble dans un solvant organique émulsionnable avec l'eau.

2. Matériaux microcomposites selon la revendication 1,
**caractérisés en ce que**
la taille moyenne des particules est de 1 et 30 µm, de préférence de 3 et 20 µm.

3. Matériaux microcomposites selon l'une au moins des revendications 1 ou 2,
**caractérisés en ce que**
la masse molaire moyenne du polymère est de 20.000 et 100.000 g/mole.

4. Matériaux microcomposites selon l'une au moins des revendications 1 à 3,
**caractérisés en ce que**
la fraction pondérale d'au moins un additif plastique est supérieure à 30 % en poids, de préférence entre 50 et 90 % en poids.

5. Matériaux microcomposites selon l'une au moins des revendications 1 à 4,
**caractérisés en ce que**
les matériaux microcomposites présentent la forme d'une microcapsule avec structure noyau-coquille, dans lesquels l'additif plastique forme le noyau, et la matrice forme la coquille.

6. Matériaux microcomposites selon l'une au moins des revendications 1 à 5,
**caractérisés en ce que**
les matériaux microcomposites présentent la forme d'une particule de matrice, dans lesquels l'additif plastique est réparti de façon pratiquement homogène dans la particule.

7. Procédé pour la préparation de matériaux microcomposites selon l'une des revendications 1 à 6, dans une matrice consistant en au moins un polymère à point de fusion élevé et au moins un additif plastique qui y est contenu, avec les étapes suivantes :
1) dissolution du polymère dans un solvant et ajout de l'additif plastique,
2) préparation d'une émulsion visqueuse stable par ajout d'un émulsifiant,
3) ajout d'un agent d'extraction pour l'extraction du solvant avec formation des matériaux microcomposites,
4) isolation des matériaux microcomposites au moyen de techniques de séparation liquide-solide.

8. Procédé selon la revendication 7,
**caractérisé en ce que**
le solvant est choisi dans le groupe diméthylformamide, diméthylacétamide, N-méthylpyrrolidone et sulfoxyde de diméthyle.

9. Procédé selon l'une au moins des revendications 8 ou 9,
**caractérisé en ce que**
la teneur du polymère dans la solution s'élève de 1 et 20 % en poids.

10. Procédé selon l'une au moins des revendications 7 à 9,
**caractérisé en ce que**
l'additif plastique se trouve sous forme dissoute dans le solvant.

11. Procédé selon l'une au moins des revendications 7 à 10,
**caractérisé en ce que**
l'additif plastique se trouve sous forme dispersée dans le solvant.

12. Procédé selon l'une au moins des revendications 7 à 11,
**caractérisé en ce que**
l'émulsifiant est choisi dans le groupe des huiles minérales ou végétales, en particulier l'huile de silicone et l'huile de paraffine.

13. Procédé selon l'une au moins des revendications 7 à 12,
**caractérisé en ce que**
le rapport du polymère dissous par rapport à l'émulsifiant est de 1/2 à 1/6, rapporté au volume.

14. Procédé selon l'une au moins des revendications 7 à 13,
**caractérisé en ce que**
la taille des gouttes des matériaux microcomposites produits est ajustée sur le rapport du polymère dissous par rapport l'émulsifiant et la vitesse d'agitation.

15. Procédé selon l'une au moins des revendications 7 à 14,
**caractérisé en ce qu'**
à l'étape 2), on ajoute en plus des émulsifiants, en particulier des composés anioniques et non-ioniques, en une concentration de 0,5 et 5 % en volume, pour la stabilisation de l'émulsion.

16. Procédé selon l'une au moins des revendications 7 à 15,
**caractérisé en ce que**
comme agents d'extraction on utilise de l'eau ou des solvants aqueux.

17. Procédé selon l'une au moins des revendications 7 à 16,
**caractérisé en ce que**
le rapport en volume entre l'agent d'extraction et l'émulsion s'élève au moins à 2/1.

18. Procédé selon l'une au moins des revendications 7 à 17,
**caractérisé en ce que**
l'isolement des matériaux microcomposites se fait par centrifugation ou par filtration.

19. Procédé selon l'une au moins des revendications 7 à 18,
**caractérisé en ce qu'**
à la suite de l'étape 4), les matériaux microcomposites sont également lavés et/ou séchés.

20. Utilisation des matériaux microcomposites selon l'une au moins des revendications 1 à 6, comme matières de charge particulières.

21. Utilisation des matériaux microcomposites selon l'une au moins des revendications 1 à 6, pour l'introduction d'additifs plastiques dans des polymères.
